# EUROPÄISCHE PATENTSCHRIFT

(11) **EP 1 401 644 B1**
(45) Veröffentlichungstag und Bekanntmachung des Hinweises auf die Patenterteilung: **26.01.2005**
(21) Anmeldenummer: 02730045.8
(22) Anmeldetag: 22.03.2002
(51) Int. Cl.: B32B 7/12, B32B 7/02

(54) **ZU EINEM FORMBAUTEIL UMFORMBARE BLECHPLATINE**
SHEET STEEL BILLET THAT CAN BE SHAPED TO FORM A COMPONENT
PLATINE DE TOLES POUVANT ETRE TRANSFORMEE EN COMPOSANT FORME

(30) Priorität: 25.04.2001 DE 10120121
(43) Veröffentlichungstag der Anmeldung: 31.03.2004
(73) Patentinhaber: ThyssenKrupp Stahl AG, 47166 Duisburg (DE)
(72) Erfinder: BEENKEN, Heiko, 59494 Soest (DE); RENNER, Ulrich, 44145 Dortmund (DE); NAZIKKOL, Cetin, 47169 Duisburg (DE)
(74) Vertreter: COHAUSZ & FLORACK
(86) Internationale Anmeldenummer: PCT/EP2002/003223
(87) Internationale Veröffentlichungsnummer: WO 2002/087872

(56) Entgegenhaltungen:
- EP-A- 1 136 253
- DE-A- 4 307 563
- DE-A- 19 919 783
- DATABASE WPI Section Ch, Week 198949 Derwent Publications Ltd., London, GB; Class A28, AN 1989-361795 XP002212348 & JP 01 272683 A (TOYODA GOSEI KK), 31. Oktober 1989 (1989-10-31)

## Beschreibung

Für verschiedene Einsatzgebiete, insbesondere beim Karosseriebau von Fahrzeugen, ist der Konstrukteur aus Gründen eines sparsamen Materialeinsatzes bestrebt, belastungsoptimierte Formbauteile zu verwenden. Bekannt und bewährt haben sich dafür Tailored Blanks. Solche Tailored Blanks, die aus verschiedenen Blechzuschnitten unterschiedlicher Festigkeit und/oder Dicke zu einer Blechplatine zusammengeschweißt sind, lassen sich durch Tiefziehen oder Pressen zum Formbauteil umformen.

Obgleich sich diese Art von Formbauteilen in der Praxis gut bewährt hat, gibt es in jüngster Zeit neue Vorschläge für herstellungstechnisch preiswertere, belastungsoptimierte Formbauteile. Diese Formbauteile sind aus geklebten Verbundblechen hergestellt. Sie bestehen aus einem Basisblech und einem Verstärkungsblech, das in einem zu verstärkenden Bereich mittels eines unter Wärme aushärtenden Klebstoffes vollflächig aufgeklebt ist. Damit ein solches Verbundblech umgeformt werden kann, wird der Klebstoff zunächst in einer ersten Wärmebandlung des Verbundbleches nur teilausgehärtet. Erst nach der Umformung wird er durch eine zweite Wärmebehandlung ausgehärtet. Bei einem zu lackierenden Formbauteil kann das in Verbindung mit dem Lackeinbrennen erfolgen (DE 199 19 783 A1).

Die Herstellung eines solchen Formbauteils ist aufwendig, weil für die Teilaushärtung des die beiden Bleche räumlich zueinander fixierenden Klebstoffes das Verbundblech erwärmt werden muss. Als weiterer Nachteil kommt aber vor allem hinzu, dass bei Verwendung eines vor der Umformung der Blechplatine zum Formbauteil teilausgehärteten und nach der Umformung vollausgehärteten Klebstoffes nicht die bei der einstufigen Vollaushärtung zu erreichende maximale Festigkeit der Klebeverbindung zu erreichen ist. Schließlich erschwert der teilausgehärtete Klebstoff die Umformarbeit.

Ausgehend von diesem Stand der Technik betrifft die Erfindung eine zu einem Formbauteil umformbare Blechplatine, auf deren Basisblech bereichsweise mindestens ein Verstärkungsblech aufgeklebt ist, wobei zwischen dem Basisblech und dem Verstärkungsblech ein bei erhöhter Temperatur aushärtender Klebstoff vollflächig aufgetragen ist.

Der Erfindung liegt die Aufgabe zugrunde, eine einfach herzustellende Blechplatine der vorgenannten Art zu schaffen, die leicht umformbar ist und deren Klebeverbindung nach der Umformung zum Formbauteil eine maximale Festigkeit hat.

Diese Aufgabe wird erfindungsgemäß dadurch gelöst, dass das Verstärkungsblech an seinem umlaufenden Rand lückenlos mit einem bei niedrigeren Temperaturen als die Aushärtungstemperatur des vollflächig aufgetragenen Klebstoffes aushärtenden Klebstoff mit dem Basisblech fest verbunden ist, wobei der bei niedrigeren Temperaturen ausgehärtete Klebstoff am Rand des Verstärkungsbleches den eingeschlossenen Raum mit dem vollflächig aufgetragenen, noch nicht ausgehärteten Klebstoff abdichtet und bei der Umformung der Blechplatine aufgrund seiner verbliebenen Elastizität abgedichtet hält.

Bei der erfindungsgemäßen Blechplatine übernimmt der am Rand des Verstärkungsbleches aufgetragene Klebstoff die Fixierung des Verstärkungsbleches auf dem Basisblech während der Lagerung, des Transportes und des Umformens und eventueller weiterer Verfahrensschritte, wie der Abdichtung des Raums mit dem noch nicht ausgehärteten Klebstoff bei der Umformung der Platine und der Reinigung des Formbauteils vor einer kathodischen Tauchlackierung und einem eventuellen Einbrennen des Lackes. Insbesondere verhindert der am Rand des Verstärkungsbleches aufgetragene Klebstoff, dass bei der Umformung der Platine der noch nicht hart gewordene Klebstoff aus dem Raum zwischen dem Basisblech und dem Verstärkungsblech herausgequetscht wird. Das bedeutet, dass dieser am Rand des Verstärkungsbleches aufgetragene Klebstoff nicht nur bei Raumtemperaturen sondern auch bei erhöhten Temperaturen, ggf. bis zu Lackeinbrenntemperaturen ausreichend fest sein muß, um fixierend und abdichtend zu wirken.

Da beim Umformen der Platine zum Formbauteil der bei erhöhter Temperatur aushärtende, vollflächig aufgetragene Klebstoff noch nicht ausgehärtet ist, ist nur geringe Umformarbeit zu leisten. Nach der Aushärtung des vollflächig aufgetragenen Klebstoffes übernimmt dann dieser die im betrieblichen Einsatz des Formbauteils verlangte großflächige schubfeste Verbindung zwischen dem Basisblech und dem Verstärkungsblech.

Die Erfindung beruht also auf dem Prinzip der Aufgabentrennung der Klebeverbindung während des Herstellungsprozesses und während des betrieblichen Einsatzes des Formbauteils. Deshalb braucht der vollflächig aufgetragene Klebstoff für den Herstellungsprozess keine Fixierungsfunktion auszuüben. Deshalb erfolgt erst nach der Umformung die in aller Regel nur eine einstufige Vollaushärtung mit dem Ergebnis einer optimalen Festigkeit, während der am Rand aufgetragene Klebstoff hinsichtlich seiner Eigenschaften nur bezüglich der Erfordernisse während des Fertigungsprozesses optimiert zu werden braucht. Da der am Rand des Verstärkungsbleches aufgetragene Klebstoff, der die Fixierung des Vestärkungsbleches übernimmt, sollte allerdings im ausgehärteten Zustand eine gewisse Flexibilität haben, um die Umformungen mitmachen zu können, ohne dass dabei seine Abdichtungsfunktion verloren geht.

Zusätzlich zur Fixierung des Verstärkungsbleches an dessen Rand können auch im übrigen Bereich des Verstärkungsbleches aus demselben Klebstoff Fixierspots vorgesehen sein.

Für den am Rand aufzutragenden Klebstoff eignet sich ein kaltaushärtender Klebstoff oder ein warmaushärtender Reaktivkleber, der bei geringeren Temperaturen aushärtet als der vollflächig aufgetragene Klebstoff. Auch ein physikalisch abbindender Klebstoff aus der Gruppe der Kontaktklebstoffe, Schmelzklebstoffe, Dispersionsklebstoffe oder Plastisole ist geeignet.

Für den am Rand aufgetragenen Klebstoff kann auch ein Hotmelt, insbesondere ein Reaktivharz, ein Epoxidharz, ein Polyurethanharz oder ein Plastisol, Verwendung finden. In diesem Fall muß dessen Vernetzungstemperatur unter der Temperatur liegen, bei der die Aushärtung des vollflächig aufgetragenen Klebstoffes einsetzt.

## Patentansprüche

1. Zu einem Formbauteil umformbare Blechplatine, auf deren Basisblech bereichsweise mindestens ein Verstärkungsblech aufgeklebt ist, wobei zwischen dem Basisblech und dem Verstärkungsblech ein bei erhöhter Temperatur aushärtender Klebstoff vollflächig aufgetragen ist, **dadurch gekennzeichnet, dass** das Verstärkungsblech an seinem umlaufenden Rand lückenlos mit einem bei niedrigeren Temperaturen als die Aushärtungstemperatur des vollflächig aufgetragenen Klebstoffes aushärtenden Klebstoff mit dem Basisblech fest verbunden ist, wobei der bei niedrigeren Temperaturen ausgehärtete Klebstoff am Rand des Verstärkungsbleches den eingeschlossenen Raum mit dem vollflächig aufgetragenen, noch nicht ausgehärteten Klebstoff abdichtet und bei der Umformung der Blechplatine aufgrund seiner verbliebenen Elastizität abgedichtet hält.

2. Blechplatine nach Anspruch 1, **dadurch gekennzeichnet, dass** der am Rand des Verstärkungsbleches aufgetragene Klebstoff im ausgehärteten Zustand flexibel ist.

3. Blechplatine nach Anspruch 1, **dadurch gekennzeichnet, dass** der am Rand des Verstärkungsbleches aufgetragene Klebstoff auch über den übrigen Bereich des Verstärkungsbleches als Fixierspots verteilt ist.

4. Blechplatine nach einem der Ansprüche 1 bis 3, **dadurch gekennzeichnet, dass** der am Rand des Verstärkungsbleches aufgetragene Klebstoff ein kaltaushärtender Klebstoff ist.

5. Blechplatine nach einem der Ansprüche 1 bis 3, **dadurch gekennzeichnet, dass** der am Rand des Verstärkungsbleches aufgetragene Klebstoff ein warmaushärtender Klebstoff ist, der bei geringeren Temperaturen als der vollflächig aufgetragene Klebstoff aushärtet.

6. Blechplatine nach einem der Ansprüche 1 bis 3, **dadurch gekennzeichnet, dass** der am Rand des Verstärkungsbleches aufgetragene Klebstoff ein physikalisch abbindender Klebstoff aus der Gruppe der Kontaktklebstoffe, Schmelzklebstoffe, Dispersionsklebstoffe oder Plastisole ist.

7. Blechplatine nach einem der Ansprüche 1 bis 6, **dadurch gekennzeichnet, dass** der vollflächig aufgetragene Klebstoff ein Hotmelt ist.

8. Blechplatine nach Anspruch 7, **dadurch gekennzeichnet, dass** das Hotmelt ein Reaktivharz ist.

9. Blechplatine nach Anspruch 7, **dadurch gekennzeichnet, dass** das Hotmelt ein Epoxidharz, Polyurethanharz oder ein Plastisol ist.

## Claims

1. A sheet metal blank which can be formed into a shaped component, on whose base sheet at least one reinforcing sheet is stuck in some regions, wherein an adhesive which cures at elevated temperature is applied between the base sheet and the reinforcing sheet over the entire area, **characterised in that** the reinforcing sheet is fixedly connected to the base sheet at its circumferential edge without any gaps using an adhesive which cures at a lower temperature compared with the adhesive applied over the entire area, wherein the adhesive cured at lower temperatures at the edge of the reinforcing sheet seals the enclosed space with the adhesive applied over the entire surface, which has not yet fully cured, and during the forming of the sheet metal blank remains sealed as a result of its remaining elasticity.

2. The sheet metal blank according to claim 1, **characterised in that** the adhesive applied to the edge of the reinforcing sheet is flexible in the cured state.

3. The sheet metal blank according to claim 1, **characterised in that** the adhesive applied to the edge of the reinforcing sheet is also distributed over the remaining area of the reinforcing sheet as fixing spots.

4. The sheet metal blank according to any one of claims 1 to 3, **characterised in that** the adhesive applied to the edge of the reinforcing sheet is a cold-curing adhesive.

5. The sheet metal blank according to any one of claims 1 to 3, **characterised in that** the adhesive applied to the edge of the reinforcing sheet is a heat-curing adhesive which cures at lower temperatures than the adhesive applied to the entire area.

6. The sheet metal blank according to any one of claims 1 to 3, **characterised in that** the adhesive applied to the edge of the reinforcing sheet is a physically binding adhesive from the group of contact adhesives, fusion adhesives, dispersion adhesives or plastisols.

7. The sheet metal blank according to any one of claims 1 to 6, **characterised in that** the adhesive applied over the entire area is a hot melt.

8. The sheet metal blank according to claim 7, **characterised in that** the hot melt is a reactive resin.

9. The sheet metal blank according to claim 7, **characterised in that** the hot melt is an epoxy resin, polyurethane resin or a plastisol.

## Revendications

1. Platine en tôle apte à être transformée en pièce profilée, formée par une tôle de base sur laquelle est collée dans certaines zones au moins une tôle de renfort, un adhésif durcissant aux températures élevées étant appliquée sur toute la surface entre la tôle de base et la tôle de renfort, **caractérisée en ce que** la tôle de renfort est assemblée en continu sur son bord périphérique avec la tôle de base au moyen d'un adhésif durcissant à de plus faibles températures que l'adhésif appliqué sur toute la surface, l'adhésif durcissant à des températures plus basses sur le bord de la tôle de renfort étanchéifiant l'espace qu'il inclut contenant l'adhésif appliqué sur toute la surface et non encore durcie et maintenant étanche ledit espace pendant le formage de la platine en tôle en raison du maintien de son élasticité.

2. Platine en tôle selon la revendication 1, **caractérisée en ce que** l'adhésif appliqué sur le bord de la tôle de renfort est flexible à l'état durci.

3. Platine en tôle selon la revendication 1, **caractérisée en ce que** l'adhésif appliqué sur le bord de la tôle de renfort est également réparti sous forme de points de fixation sur le reste de la zone de la tôle de renfort.

4. Platine en tôle selon l'une quelconque des revendications 1 à 3, **caractérisée en ce que** l'adhésif appliqué sur le bord de la tôle de renfort est un adhésif durcissant à froid.

5. Platine en tôle selon l'une quelconque des revendications 1 à 3, **caractérisée en ce que** l'adhésif appliqué sur le bord de la tôle de renfort est un adhésif durcissant à chaud, qui durcit en présence de températures plus faibles que l'adhésif appliqué sur toute la surface.

6. Platine en tôle selon l'une quelconque des revendications 1 à 3, **caractérisée en ce que** l'adhésif appliqué sur le bord de la tôle de renfort est un adhésif durcissant physiquement, choisi dans le groupe des adhésifs de contact, des adhésifs thermofusibles, des adhésifs à dispersion ou des plastisols.

7. Platine en tôle selon l'une quelconque des revendications 1 à 6, **caractérisée en ce que** l'adhésif appliqué sur toute la surface est un adhésif thermofusible.

8. Platine en tôle selon la revendication 7, **caractérisée en ce que** l'adhésif thermofusible est une résine réactive.

9. Platine en tôle selon la revendication 7, **caractérisée en ce que** l'adhésif thermofusible est une résine époxy, une résine polyuréthanne ou un plastisol.
